# EUROPÄISCHE PATENTSCHRIFT

(11) **EP 3 517 820 B1**
(45) Veröffentlichungstag und Bekanntmachung des Hinweises auf die Patenterteilung: **05.05.2021**
(21) Anmeldenummer: 18209033.2
(22) Anmeldetag: 29.11.2018
(51) Int. Cl.: F16L 57/00, F16L 57/02, F16L 57/06, F16L 58/00, F16L 11/20, B60R 16/02, E02F 9/22, H02G 3/04

(54) **SCHUTZUMHÜLLUNG**
PROTECTIVE SLEEVE
GAINE DE PROTECTION

(30) Priorität: 30.01.2018 DE 102018101965; 30.01.2018 DE 202018100488 U
(43) Veröffentlichungstag der Anmeldung: 31.07.2019
(73) Patentinhaber: Friedrich Seiz GmbH, 72555 Metzingen (DE)
(72) Erfinder: Seiz, Rainer, 72555 Metzingen (DE)
(74) Vertreter: Ruckh, Rainer Gerhard

(56) Entgegenhaltungen:
- WO-A1-00/79662
- DE-A1-102008 036 460
- US-A- 5 744 206
- US-A1- 2002 021 958

## Beschreibung

Die Erfindung betrifft eine Schutzumhüllung.

Bei Arbeitsgeräten, wie zum Beispiel Baggern, Hebegeräten oder Greifern sind bewegliche Geräteteile vorgesehen, die gegenüber einer stationären Basis des Arbeitsgeräts bewegt werden können, um bestimmte Arbeitsprozesse durchzuführen. Bei derartigen Arbeitsgeräten ist es erforderlich, Medienführungen wie elektrische, hydraulische oder pneumatische Leitungen von der stationären Basis zu dem beweglichen Geräteteil zu führen.

Bereits aufgrund der vom beweglichen Geräteteil ausgeführten Bewegungen sind die Leitungen erheblichen mechanischen Belastungen ausgesetzt, so dass dadurch eine Gefahr eines Abknickens oder sonstiger Beschädigungen der Leitungen besteht. Hinzu kommen äußere Störeinflüsse wie Witterungseinflüsse oder mechanische Belastungen durch Stöße oder dergleichen.

Die US 5 744 206 A betrifft eine Schutzhülle für Kabel und dergleichen. Die Schutzhülle umfasst ein Geflecht aus Strängen, die aus einem polymeren Material bestehen können. In dieses Geflecht sind weitere Stränge, die aus metallischen Werkstoffen bestehen können, eingearbeitet, welche zu einer mechanischen Stabilisierung führen.

Die WO 00/79662 A1 betrifft eine Umhüllung für Kabel und dergleichen. Die Umhüllung weist Einsätze auf, um diese in mehrere Abschnitte zu unterteilen. Die DE 10 2008 036 460 A1 betrifft eine Vorrichtung zum Führen von Leitungen mit einem biegsamen Schutzschlauch. Dabei ist der Schutzschlauch um seine Längsachse derart tordierbar, dass Form und Größe der Querschnittsflächen des von dem Schutzschlauch ummantelten Volumens im Wesentlichen konstant bleiben.

Die US 2002/0021958 A1 betrifft eine Leitungsstruktur einer Arbeitsmaschine. Die Leitungsstruktur weist einen Zylinder auf, in welchen ein Schlauch geführt ist.

Der Erfindung liegt die Aufgabe zugrunde, derartige Leitungen bei geringem Aufwand möglichst umfangreich gegen Störeinflüsse zu sichern.

Zur Lösung dieser Aufgabe ist eine Schutzumhüllung mit den Merkmalen des Anspruchs 1 vorgesehen. Vorteilhafte Ausführungsformen und zweckmäßige Weiterbildungen der Erfindung sind in den abhängigen Ansprüchen beschrieben.

Mit der erfindungsgemäßen Schutzumhüllung wird ein umfangreicher Schutz einer aus einer oder mehreren Leitungen bestehenden Medienführung ermöglicht, so dass diese gegen Beschädigungen auch dann geschützt ist, wenn die Medienführung hohen mechanischen Belastungen und auch Störeinflüssen wie Witterungseinflüssen ausgesetzt ist.

Zunächst wird eine Schutzwirkung dadurch erzielt, dass die zentrale Kammer des Schlauchs der Schutzumhüllung die Medienführung umschließt, welche allgemein von elektrischen, pneumatischen oder hydraulischen Leitungen gebildet sein kann. Ein wesentlicher Vorteil besteht dabei darin, dass der Schlauch aus einem textilen Material besteht und damit flexibel ist. Somit kann sich der Schlauch an Bewegungen der Medienführung anpassen, die insbesondere dann auftreten, wenn bei einem Arbeitsgerät die Medienführung eine stationäre Basis mit einem beweglichen Geräteteil verbindet.

Der Schlauch schützt die Medienführung gegen Witterungseinflüsse, insbesondere thermische Belastungen, und auch gegen Verschmutzungen. Auch ein gewisser mechanischer Schutz der Medienführung ist durch den Schlauch gegeben. Erfindungsgemäß ist der Schlauch der Schutzumhüllung als Mehrkammersystem ausgebildet, wobei eine zentrale Kammer die Medienführung direkt umschließt und schützt. Weiterhin sind außen an die zentrale Kammer anschließend äußere Kammern vorgesehen, in welchen Schutzelemente angeordnet sind. Diese sorgen für einen effektiven mechanischen Schutz, da diese Schutzelemente eine hohe Eigenstabilität aufweisen und so äußere mechanische Belastungen, insbesondere Stoßbelastungen auffangen können. Insbesondere schützen die Schutzelemente die Medienführung gegen Knickbelastungen, das heißt die Schutzelemente stabilisieren die Medienführung, so dass verhindert wird, dass die Medienführung bei Auftreten hoher Dauerbelastungen einreißt oder in sonstiger Weise beschädigt wird.

Gemäß einer vorteilhaften Ausführungsform ist der Durchmesser der zentralen Kammer an den Außendurchmesser der Medienführung angepasst. Die Durchmesser der äußeren Kammern sind an die Außendurchmesser der Schutzelemente angepasst.

Dabei weisen die zentrale Kammer und die äußeren Kammern vorzugsweise einen über ihre Länge konstanten Querschnitt auf. Diese Querschnitte sind so gewählt, dass sich aufgrund der elastischen Eigenschaften des tcxtilcn Materials des Schlauchs dieser bei Einführen der Medienführung in die zentrale Kammer und der Schutzelemente in die äußeren Kammern etwas dehnt, so dass das Schlauchmaterial mit einer gewissen Spannung an der Medienführung beziehungsweise dem Schutzelement anliegt, so dass ein sicherer Halt gegeben ist.

Weiter vorteilhaft bilden die äußeren Kammern eine bezüglich der zentralen Kammer drehsymmetrische Anordnung.

Durch diese drehsymmetrische Anordnung sind die äußeren Kammern mit den darin gelagerten Schutzelementen äquidistant in Umfangsrichtung der zentralen Kammer angeordnet, so dass eine in alle Richtungen gleichförmige Schutzwirkung der in der zentralen Kammer geführten Medienführung erhalten wird.

Optional kann die Schutzwirkung der Schutzumhüllung dadurch noch erweitert sein, dass der das Mehrkammersystem bildende Schlauch von einem Außenschlauch umgeben ist.

Dieser Außenschlauch sorgt für einen weiteren Schutz gegen thermische und auch mechanische Belastungen.

Besonders vorteilhaft ist der Schlauch einstückig ausgebildet.

Der Schlauch kann dann von einer einzigen textilen Fläche gebildet sein, die zu einem geschlossenen Schlauch vernäht wird. Damit kann der Schlauch rationell gefertigt werden.

Insbesondere kann der Schlauch auch als Endlosprodukt gefertigt werden, wobei dann das Endlosprodukt durch Zuschneiden auf die gewünschte Länge gebracht wird. Vorteilhaft sind dabei in den passenden Abständen Klebeverbindungen am Endlosprodukt angebracht. Dort erfolgt das Aufschneiden des Endlosprodukts. Die Klebeverbindungen zeigen nicht nur die Stellen an, wo das Endlosprodukt aufgeschnitten werden soll. Vielmehr verhindern diese bei Aufschneiden des Endlosprodukts ein unerwünschtes Ablösen von Fäden aus der textilen Fläche.

Weiter vorteilhaft sind in den Schlauch entlang dessen Längsachse verlaufende Markierungen eingearbeitet. Zur Bildung einer äußeren Kammer sind zwei benachbarte Markierungen zusammengeführt und miteinander vernäht.

Dabei sind insbesondere die Markierungen von Maschenfehlern oder Webfehlern gebildet.

Die Markierungen geben gut sichtbar vor, wie der Schlauch zusammengefaltet werden muss und wo die Nahtverbindung eingearbeitet werden muss, um eine äußere Kammer auszubilden. Die äußeren Kammern können so schnell, einfach und reproduzierbar aus dem Schlauch als Ausgangsmaterial hergestellt werden.

Der Schlauch besteht vorteilhaft aus einem Gestrick, wobei dieses in Form eines Rundstrickmaterials gefertigt wird, das heißt bereits bei diesem Fertigungsvorgang wird die Schlauchform erstellt. Alternativ kann der Schlauch auch als Flachstrickmaterial gefertigt werden. In diesem Fall muss die so erstellte textile Fläche noch zu einem geschlossenen Schlauch vernäht werden.

Alternativ kann der Schlauch aus einem Gewirk, Gewebe oder Vlies bestehen.

Dasselbe gilt auch für den Außenschlauch.

Vorteilhaft besteht der Schlauch und/oder der Außenschlauch aus reißfesten Fäden.

Vorteilhaft bestehen die Fäden aus Aramiden, insbesondere Para-Aramiden und/oder Meta-Aramiden.

Alternativ oder zusätzlich bestehen die Fäden aus Polyamid, Polyester und/oder Polypropylen.

Weiterhin kann der Schlauch auch Stahlfäden oder Inoxfäden aufweisen.

Besonders geeignete Ausführungsformen von Fäden zur Herstellung des Schlauchs bestehen aus Kevlar, Tawaron, Tawaron CS, Nomex, Technora, Dyneema, Elastan, HPPE beziehungsweise UHMW-PE.

Die in den äußeren Kammern geführten Schutzelemente weisen generell eine Stützfunktion für die Medienführung auf und schützen diese gegen mechanische Belastungen.

Dabei können die Schutzelemente von stabförmigen Massivkörpern gebildet sein.

Die Massivkörper können starr ausgebildet sein und als Kohlefaser oder Edelstahlstäbe ausgebildet sein.

Besonders vorteilhaft bestehen die Massivkörper aus elastisch verformbaren Materialien, so dass sich die Schutzelemente biegen können.

Die Erfindung wird im Folgenden anhand der Zeichnungen erläutert. Es zeigen:
- Figur 1a: Erstes Ausführungsbeispiel eines Schlauchs für die erfindungsgemäße Schutzumhüllung in einer Querschnittsdarstellung.
- Figur 1b: Schlauch gemäß Figur 1a, ummantelt mit einem Außenschlauch.
- Figur 1c: Perspektivische Darstellung des Schlauchs gemäß Figur 1a.
- Figur 2: Komplettdarstellung der Schutzumhüllung mit dem Schlauch gemäß Figur 1a.
- Figur 3a: Zweites Ausführungsbeispiel eines Schlauchs für die erfindungsgemäße Schutzumhüllung in einer Querschnittsdarstellung.
- Figur 3b: Schlauch gemäß Figur 3a, ummantelt mit einem Außenschlauch.

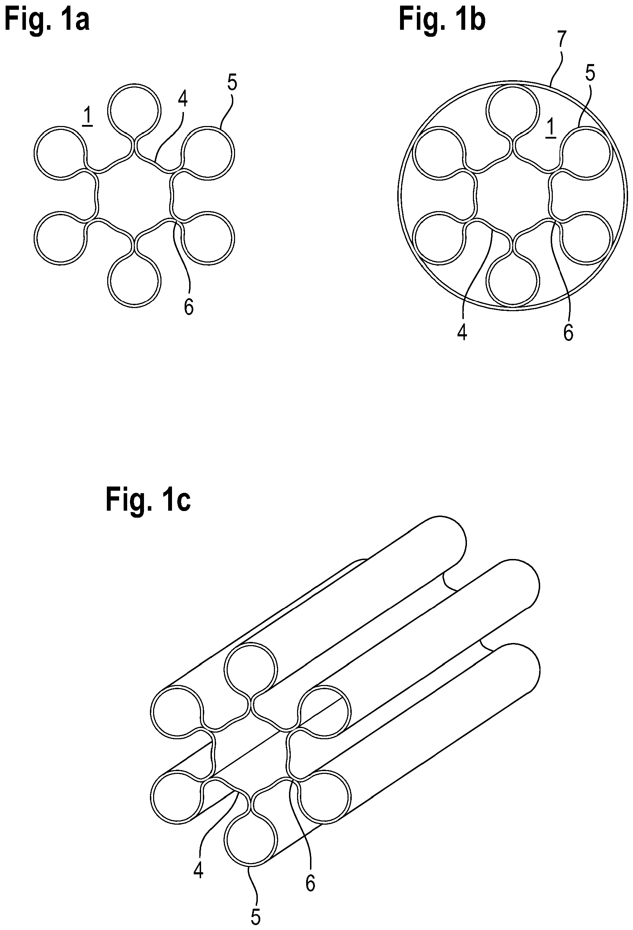

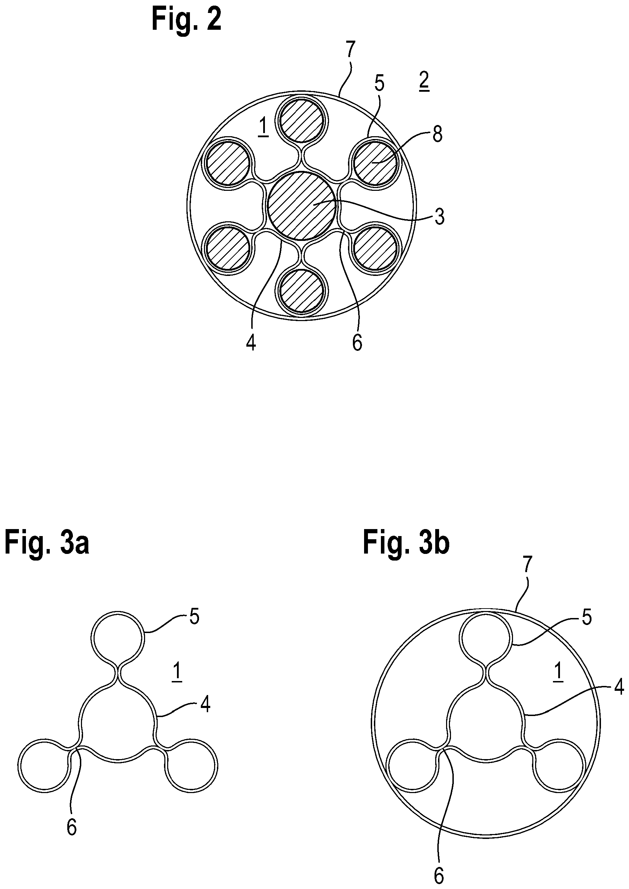

Die Figuren 1a bis 1c zeigen ein Ausführungsbeispiel eines aus einem textilen Material bestehenden Schlauchs 1 als Bestandteil einer Schutzumhüllung 2 für eine Medienführung 3 wie sie in Figur 2 dargestellt ist.

Der Schlauch 1 gemäß den Figuren 1a, 1c bildet ein Mehrkammersystem aus, welches eine zentrale Kammer 4 und an die äußere Mantelfläche der zentralen Kammer 4 anschließende äußere Kammern 5 aufweist. Die äußeren Kammern 5 sind identisch ausgebildet und bilden eine drehsymmetrische Anordnung, das heißt die äußeren Kammern 5 sind in Umfangsrichtung äquidistant an der zentralen Kammer 4 angeordnet. Die Querschnitte der zentralen Kammer 4 und der äußeren Kammern 5 sind über ihre Gesamtlänge konstant, wobei sich die zentrale Kammer 4 und die äußeren Kammern 5 über die gesamte Schlauchlänge erstrecken. Die Längsachsen der zentralen Kammer 4 und der äußeren Kammern 5 verlaufen parallel zueinander entlang der Schlauch-Längsachse. Der Schlauch 1 gemäß Figuren 1a, 1c bildet ein Mehrkammersystem mit sechs äußeren Kammern 5. Das Mehrkammersystem kann natürlich auch eine andere Anzahl von äußeren Kammern 5 aufweisen. Im Ausführungsbeispiel gemäß den Figuren 3a, 3b ist ein Schlauch 1 dargestellt, der ein Mehrkammersystem mit drei Außenkammern aufweist.

Der Schlauch 1 kann aus einem Gewirk, Gewebe oder Vlies bestehen. Im vorliegenden Fall besteht der Schlauch 1 aus einem Gestrick. Generell ist der Schlauch 1 aus reißfesten Fäden gebildet.

Im vorliegenden Fall ist der Schlauch 1 einstückig ausgebildet und besteht aus einem Rundstrickmaterial, das heißt bereits bei dem Strickvorgang wird die geschlossene Schlauchform gebildet. Alternativ kann der Schlauch 1 auch aus einer oder mehreren textilen Flächen bestehen, die zusammengenäht werden.

Die zentrale Kammer 4 und die daran anschließenden äußeren Kammern 5 werden aus dem Schlauch 1 dadurch gebildet, dass dieser entlang sich über die gesamte Länge des Schlauchs 1 erstreckende Nahtlinien 6 vernäht wird.

Um ein reproduzierbares Vernähen zu gewährleisten, sind in das Schlauchmaterial gezielt Markierungen in Form von Maschenfehlern eingearbeitet. Diese Markierungen verlaufen parallel im Abstand zueinander über die gesamte Länge des Schlauchs 1. Zur Bildung einer äußeren Kammer 5 werden zwei benachbarte Markierungen zusammengeführt, so dass eine die äußere Kammer 5 bildende Schlaufe gebildet wird. Die zusammengeführten Markierungen werden miteinander vernäht und bilden so eine Nahtlinie 6. Auf diese Weise werden alle äußeren Kammern 5 hergestellt.

Wie Figur 1b beziehungsweise Figur 3b zeigt, kann optional der das Mehrkammersystem bildende Schlauch 1 mit einem Außenschlauch 7 ummantelt sein, der für einen zusätzlichen thermischen und mechanischen Schutz sorgt. Der Außenschlauch 7 ist Bestandteil der erfindungsgemäßen Schutzumhüllung 2 und besteht vorzugsweise aus demselben Material wie der Schlauch 1. Der Außenschlauch 7 ist vorzugsweise aus einer textilen Fläche gebildet, die um das Mehrkammersystem gelegt wird und deren freie Ränder mit nicht dargestellten Verschlussmitteln wie Klettverschlüssen zur Bildung einer geschlossenen Schlauchform verbunden werden. Der so ausgebildete Außenschlauch 7 liegt direkt an den außenliegenden Flächen der äußeren Kammern 5 des Mehrkammersystems an und erstreckt sich über die gesamte Länge des Schlauchs 1.

Figur 2 zeigt die komplette Schutzumhüllung 2 mit dem das Mehrkammersystem bildenden Schlauch 1 und dem Außenschlauch 7 gemäß den Figuren 1a bis 1c. Die Schutzumhüllung 2 dient zum Schutz einer Medienführung 3. Die Medienführung 3 kann von einer elektrischen, pneumatischen oder hydraulischen Leitung gebildet sein. Generell kann die Medienführung 3 aus einer Mehrfachanordnung der vorgenannten Leitungen gebildet sein.

Wie aus Figur 2 ersichtlich, ist die Medienführung 3 in die zentrale Kammer 4 eingeführt, wobei sich die Medienführung 3 über die gesamte Länge des Schlauchs 1 erstreckt. Der Innendurchmesser der zentralen Kammer 4 ist an den Außendurchmesser der Medienführung 3 angepasst, so dass die Schlauchsegmente der zentralen Kammer 4 dicht an der Medienführung 3 anliegen.

Die Ummantelung der Medienführung 3 mit den Schlauchsegmenten der zentralen Kammer 4 sorgt bereits für einen Schutz der Medienführung 3 gegen mechanische und thermische Belastungen. Eine weitergehende mechanische Schutzwirkung für die Medienführung 3 wird dadurch erhalten, dass in jede der äußeren Kammern 5 ein Schutzelement 8 eingeführt wird. Die identisch ausgebildeten Schutzelemente 8 sind in Form von langgestreckten stabförmigen Körpern ausgebildet, die einen über ihre Länge konstanten Querschnitt aufweisen. Die Länge eines Schutzelements 8 entspricht der Länge der zugeordneten äußeren Kammer 5. Der Außendurchmesser jedes Schutzelements 8 ist an den Innendurchmesser der zugeordneten äußeren Kammer 5 angepasst, so dass die Schlauchsegmente der äußeren Kammern 5 nicht an den Schutzelementen 8 anliegen.

Die Schutzelemente 8 bilden Abstützungen für die Medienführung 3 und verhindern dadurch unkontrollierte Bewegungen, insbesondere ein Abknicken der Medienführung 3. Weiterhin schützen die Schutzelemente 8 die Medienführung 3 gegen äußere mechanische Belastungen wie Stöße.

Die Schutzelemente 8 können von weitgehend starren Massivkörpern gebildet sein, wie zum Beispiel Edelstahl- oder Kohlefaserstäben. In diesem Fall wird die Medienführung 3 durch die Schutzelemente 8 nahezu vollständig gegen Bewegungen, insbesondere auch Biegebewegungen, geschützt.

Vorteilhaft können die Schutzelemente 8 auch als elastisch verformbare Körper ausgebildet sein, wobei die Schutzelemente 8 beispielsweise als Massivkörper aus Silikon oder gummiartigen Materialien bestehen können.

Die Medienführung 3 kann generell an einem Arbeitsgerät vorgesehen sein, wobei die Medienführung 3 eine stationäre Basis mit einem beweglichen Geräteteil des Arbeitsgeräts verbinden kann. Bei Bewegungen des Geräteteils kann die Medienführung 3 diesen Bewegungen folgen. Durch die die Medienführung 3 umgebende erfindungsgemäße Schutzumhüllung 2 ist die Medienführung 3 gegen Beschädigungen geschützt.

### Bezugszeichenliste

- (1): Schlauch
- (2): Schutzumhüllung
- (3): Medienführung
- (4): zentrale Kammer
- (5): äußere Kammer
- (6): Nahtlinie
- (7): Außenschlauch
- (8): Schutzelement

## Patentansprüche

1. Schutzumhüllung (2) für eine Medienführung (3) umfassend einen aus textilem Material bestehenden Schlauch (1), der ein Mehrkammersystem mit mehreren Kammern (5) ausbildet, wobei die Kammern sich entlang der Längsachse des Schlauchs (1) erstrecken, wobei eine zentralen Kammer (4) zur Führung der Medienführung (3) ausgebildet ist und wobei in an die äußeren Mantelflächen der zentralen Kammer (4) anschließenden äußeren Kammern (5) jeweils ein Schutzelement (8) geführt ist.

2. Schutzumhüllung (2) nach Anspruch 1, mit einer Medienführung **dadurch gekennzeichnet, dass** der Durchmesser der zentralen Kammer (4) an den Außendurchmesser der Medienführung (3) angepasst ist, und dass die Durchmesser der äußeren Kammern (5) an die Außendurchmesser der Schutzelemente (8) angepasst sind.

3. Schutzumhüllung (2) nach einem der Ansprüche 1 oder 2, **dadurch gekennzeichnet, dass** die äußeren Kammern (5) eine bezüglich der zentralen Kammer (4) drehsymmetrische Anordnung bilden.

4. Schutzumhüllung (2) nach einem der Ansprüche 1 bis 3, **dadurch gekennzeichnet, dass** der das Mehrkammersystem bildende Schlauch (1) von einem Außenschlauch (7) umgeben ist.

5. Schutzumhüllung (2) nach Anspruch 4, **dadurch gekennzeichnet, dass** der Schlauch (1) und/oder der Außenschlauch (7) aus einem Flach- oder Rundstrickmaterial besteht.

6. Schutzumhüllung (2) nach Anspruch 4, **dadurch gekennzeichnet, dass** der Schlauch (1) und/oder der Außenschlauch (7) aus einem Gewirk, Gewebe oder Vlies besteht.

7. Schutzumhüllung (2) nach einem der Ansprüche 4 bis 6, **dadurch gekennzeichnet, dass** der Schlauch (1) und/oder der Außenschlauch (7) aus reißfesten Fäden besteht.

8. Schutzumhüllung (2) nach einem der Ansprüche 1 bis 7, **dadurch gekennzeichnet, dass** der Schlauch (1) einstückig ausgebildet ist.

9. Schutzumhüllung (2) nach Anspruch 8, **dadurch gekennzeichnet, dass** die äußeren Kammern (5) durch Vernähen des Schlauchs (1) gebildet sind.

10. Schutzumhüllung (2) nach Anspruch 9, **dadurch gekennzeichnet, dass** in den Schlauch (1) entlang dessen Längsachse verlaufende Markierungen eingearbeitet sind, wobei zur Bildung einer äußeren Kammer zwei benachbarte Markierungen zusammengeführt und miteinander vernäht sind.

11. Schutzumhüllung (2) nach Anspruch 10, **dadurch gekennzeichnet, dass** die Markierungen von Maschenfehlern oder Webfehlern gebildet sind.

12. Schutzumhüllung (2) nach einem der Ansprüche 1 bis 11, **dadurch gekennzeichnet, dass** die Schutzelemente von stabförmigen Massivkörpern gebildet sind.

13. Schutzumhüllung (2) nach einem der Ansprüche 1 bis 12, **dadurch gekennzeichnet, dass** die Schutzelemente aus elastisch verformbaren Materialien bestehen.

14. Schutzumhüllung (2) nach einem der Ansprüche 1 bis 13, **dadurch gekennzeichnet, dass** die Medienführung (3) von wenigstens einer elektrischen, hydraulischen oder pneumatischen Leitung gebildet ist.

## Claims

1. Protective enclosure (2) for a media guide (3), comprising a hose (1), which consists of textile material and which forms a multi-chamber system with a plurality of chambers (5), wherein the chambers extend along the longitudinal axis of the hose (1), wherein a central chamber (4) is formed for guidance of the media guide (3) and wherein a respective protective element (8) is guided in each of outer chambers (5) connected with the outer circumferential surfaces of the central chamber (4).

2. Protective enclosure (2) according to claim 1, with a media guide, **characterised in that** the diameter of the central chamber (4) is matched to the outer diameter of the media guide (3) and that the diameter of the outer chambers (5) are matched to the outer diameter of the protective elements (8).

3. Protective enclosure (2) according to one of claims 1 and 2, **characterised in that** the outer chambers (5) form an arrangement which is rotationally symmetrical with respect to the central chamber (4).

4. Protective enclosure (2) according to any one of claims 1 to 3, **characterised in that** the hose (1) forming the multi-chamber system is surrounded by an outer hose (7).

5. Protective enclosure (2) according to claim 4, **characterised in that** the hose (1) and/or the outer hose (7) consists or consist of a flat-knitted material or a circular-knitted material.

6. Protective enclosure (2) according to claim 4, **characterised in that** the hose (1) and/or the outer hose (7) consists or consist of a knitted material, a textile or a non-woven material.

7. Protective enclosure (2) according to any one of claims 4 to 6, **characterised in that** the hose (1) and/or the outer hose (7) consists or consist of tear-resistant threads.

8. Protective enclosure (2) according to any one of claims 1 to 7, **characterised in that** the hose (1) is of integral construction.

9. Protective enclosure (2) according to claim 8, **characterised in that** the outer chambers (5) are formed by sewing the hose (1).

10. Protective enclosure (2) according to claim 9, **characterised in that** markings are formed in the hose (1) to extend along the longitudinal axis thereof, wherein two adjacent markings are combined and sewed together to form an outer chamber.

11. Protective enclosure (2) according to claim 10, **characterised in that** the markings are formed by stitch deficiencies or web deficiencies.

12. Protective enclosure (2) according to any one of claims 1 to 11, **characterised in that** the protective elements are formed by rod-shaped solid bodies.

13. Protective enclosure (2) according to any one of claims 1 to 12, **characterised in that** the protective elements consist of elastically deformable materials.

14. Protective enclosure (2) according to any one of claims 1 to 13, **characterised in that** the media guide (3) is formed by at least one electrical, hydraulic or pneumatic conduit.

## Revendications

1. Gaine de protection (2) destinée à une canalisation de puissance (3), comprenant un tuyau souple (1) constitué d'un matériau textile et donnant naissance à un système à chambres multiples incluant plusieurs chambres (5), lesquelles chambres (5) s'étendent le long de l'axe longitudinal dudit tuyau souple (1), sachant qu'une chambre centrale (4) est conçue pour guider ladite canalisation de puissance (3), et sachant qu'un élément protecteur (8) est guidé, à chaque fois, dans des chambres extérieures (5) attenantes aux surfaces de l'enveloppe extérieure de ladite chambre centrale (4).

2. Gaine de protection (2) selon la revendication 1, associée à une canalisation de puissance, **caractérisée par le fait que** le diamètre de la chambre centrale (4) est adapté au diamètre extérieur de la canalisation de puissance (3) ; et **par le fait que** les diamètres des chambres extérieures (5) sont adaptés aux diamètres extérieurs des éléments protecteurs (8).

3. Gaine de protection (2) selon l'une des revendications 1 ou 2, **caractérisée par le fait que** les chambres extérieures (5) forment un ensemble à symétrie de rotation par rapport à la chambre centrale (4).

4. Gaine de protection (2) selon l'une des revendications 1 à 3, **caractérisée par le fait que** le tuyau souple (1), formant le système à chambres multiples, est entouré par un tuyau souple extérieur (7).

5. Gaine de protection (2) selon la revendication 4, **caractérisée par le fait que** le tuyau souple (1), et/ou le tuyau souple extérieur (7), consiste(nt) en un tricot rectiligne ou circulaire.

6. Gaine de protection (2) selon la revendication 4, **caractérisée par le fait que** le tuyau souple (1), et/ou le tuyau souple extérieur (7), consiste(nt) en un tricot, en un tissu ou en un non-tissé.

7. Gaine de protection (2) selon l'une des revendications 4 à 6, **caractérisée par le fait que** le tuyau souple (1), et/ou le tuyau souple extérieur (7), consiste(nt) en des fils résistant à la déchirure.

8. Gaine de protection (2) selon l'une des revendications 1 à 7, **caractérisée par le fait que** le tuyau souple (1) est de réalisation monobloc.

9. Gaine de protection (2) selon la revendication 8, **caractérisée par le fait que** les chambres extérieures (5) sont formées par couture du tuyau souple (1).

10. Gaine de protection (2) selon la revendication 9, **caractérisée par le fait que** des repères, s'étendant le long de l'axe longitudinal du tuyau souple (1), sont ménagés intérieurement dans ce dernier, deux repères voisins étant regroupés et solidarisés par couture en vue de former une chambre extérieure.

11. Gaine de protection (2) selon la revendication 10, **caractérisée par le fait que** les repères sont formés par des défauts de maillage ou par des défauts de tissage.

12. Gaine de protection (2) selon l'une des revendications 1 à 11, **caractérisée par le fait que** les éléments protecteurs sont constitués par des corps massifs en forme de tige.

13. Gaine de protection (2) selon l'une des revendications 1 à 12, **caractérisée par le fait que** les éléments protecteurs consistent en des matériaux élastiquement déformables.

14. Gaine de protection (2) selon l'une des revendications 1 à 13, **caractérisée par le fait que** la canalisation de puissance (3) est constituée d'au moins un conducteur ou conduit électrique, hydraulique ou pneumatique.
